# EUROPÄISCHE PATENTSCHRIFT

(11) **EP 2 353 894 B1**
(45) Veröffentlichungstag und Bekanntmachung des Hinweises auf die Patenterteilung: **13.05.2015**
(21) Anmeldenummer: 10001703.7
(22) Anmeldetag: 19.02.2010
(51) Int. Cl.: B60D 5/00

(54) **Wellenbalg eines Übergangs zwischen zwei gelenkig miteinander verbundenen Fahrzeugen**
Gangway bellows for the intersection of two vehicles with a jointed connection
Soufflet d'un passage entre deux véhicules liés de manière articulée

(30) Priorität: 05.02.2010 EP 10001203
(43) Veröffentlichungstag der Anmeldung: 10.08.2011
(73) Patentinhaber: Hübner GmbH & Co. KG, 34123 Kassel (DE)
(72) Erfinder: Jünke, Volker, 34587 Felsberg (DE); Goebels, Andre, 34134 Kassel (DE)
(74) Vertreter: Walther, Walther & Hinz GbR

(56) Entgegenhaltungen:
- EP-A1- 0 558 295
- DE-U1-202005 008 670
- FR-A- 914 247
- US-A- 4 570 964

## Beschreibung

Die Erfindung betrifft einen Wellenbalg eines Übergangs zwischen zwei gelenkig miteinander verbundenen Fahrzeugen, umfassend mehrere U-förmige Wellen, wobei zwei benachbarte Wellen durch einen Rahmen miteinander in Verbindung stehen, wobei die im Querschnitt U-förmige Welle zwei Schenkel sowie einen die Schenkel verbindenden Steg aufweist, wobei der Steg im Wesentlichen eben ausgebildet ist, sodass die Schenkel und der Steg in im Wesentlichen neutraler Stellung des Balges im rechten Winkel zueinander verlaufen.

Ein Wellenbalg der eingangs genannten Art ist als Teil eines Übergangs zwischen zwei gelenkig miteinander verbundenen Fahrzeugen aus dem Stand der Technik hinreichend bekannt und braucht an dieser Stelle nicht näher erläutert zu werden.

Derartige Wellenbälge werden, wie dies bereits ausgeführt worden ist, zur Überbrückung des Abstands zwischen zwei gelenkig miteinander verbundenen Fahrzeugen eingesetzt. Bekannt ist, dass die Anordnung des Balges zwischen zwei gelenkig miteinander verbundenen Fahrzeugen unmittelbar im Bereich des eigentlichen Durchgangs, den Durchgang rechteckförmig umgebend, erfolgt. Hierbei befindet sich zwischen der Außenmantelfläche dieses Übergangsbalges und der Außenwand des Wagenkastens ein Abstand zwischen 30 und 50 cm. Dies führt insbesondere bei schneller Fahrt zu einer nicht unerheblichen Wirbelbildung, was den Luftwiderstand beträchtlich erhöht.

Um hier Abhilfe zu schaffen, ist denkbar, den Balg eines Übergangs im Bereich der Außenkontur des Fahrzeuges anzusetzen, d .h. im Idealfall bildet die Außenseite des Balges mit der Außenwand des Fahrzeuges eine im Wesentlichen durchgängige Fläche. Dieser Balg, der außen im Bereich der Fahrzeugwandung verläuft, ist gegebenenfalls ein Teil eines Doppelwellenbalges, wobei der gegebenenfalls andere Teil dieses Balges unmittelbar um die Übergangsbrücke und gegebenenfalls auch um das Gelenk herum geführt ist. Das heißt, in einem solchen Fall besteht ein nicht unerheblicher Abstand zwischen dem inneren Balg und dem äußeren Balg.

Der Nachteil der Verwendung eines üblichen Wellenbalges im Bereich der Außenwandung des Fahrzeuges, also die Anordnung eines im Wesentlichen mit der Außenwandung des Waggons konturgleichen Balges, besteht darin, dass ein solcher Balg nicht unerhebliche Verwirbelungen unmittelbar an der Balgoberfläche zeigt, was darin begründet ist, dass die einzelnen Wellenelemente eines solchen Balges im Bereich des Steges bogenförmig ausgebildet sind. Der Grund für die bogenförmige Gestaltung der Stege liegt darin, dass in der neutralen Stellung des Balges, also bei Geradeausfahrt des Fahrzeuges, der Balg unter leichtem Druck in Längsrichtung zwischen den Fahrzeugen steht, wobei im Wesentlichen hierdurch die bogenförmige Form der Stege entsteht.

Aus der EP 0 558 295 A1 ist in diesem Zusammenhang eine Verbindung zwischen zwei Fahrzeugen vorgesehen, die wellenförmige Elemente aufweist, die im Querschnitt rechteckig ausgebildet sind. Allerdings zeigt dieser Stand der Technik keinen geschlossenen Balg, vielmehr ist lediglich die Auszugsweite der einzelnen Elemente bei Kurvenfahrt durch eine Auszugseinrichtung begrenzbar.

Die der Erfindung zugrunde liegende Aufgabe besteht demzufolge darin, einen Wellenbälg der eingangs genannten Art bereitzustellen, der eine geringere Wirbelbildung auf der Außenseite des Balges zeigt.

Zur Lösung der Aufgabe wird erfindungsgemäß vorgeschlagen, dass der Steg zur Erhöhung der Materialstärke mehrere Gewebelagen aufweist. Hieraus wird deutlich, dass zur Erhöhung der Stabilität mehrere Schichten eines Gewebes übereinander angeordnet sind.

Vorteilhafte Merkmale sind den Unteransprüchen zu entnehmen.

Eine Welle mit ebenem Steg kann zum Beispiel im Wege eines formgebenden Verfahrens hergestellt werden.

In diesem Zusammenhang ist nach einer ersten Variante vorgesehen, die Materialstärke des Stegs größer zu gestalten als die Materialstärke der Schenkel, wobei das Material vom Steg und Schenkel identisch ist.

Nach einer anderen Variante ist vorgesehen, dass das Material des Stegs steifer ist als das Material der Schenkel, sodass auch hier bei einem im Wesentlichen eben geformten Steg die Schenkel und der Steg in im Wesentlichen neutralen Zustand des Balges im rechten Winkel zueinander verlaufen. Alternativ kann vorgesehen sein, sowohl das Material des Stegs steifer zu gestalten als auch die Materialstärke zu erhöhen. Dies immer vor dem Hintergrund, dass der Steg im Wesentlichen starr bleiben soll, d. h., wenn das Material des Steges im Ausgangszustand eine Ebene bildet, eine solche ebene Gestaltung des Stegs beibehalten wird, wenn der Steg in Verbindung mit den Schenkeln die Welle eines Wellenbalges bildet. Für die Fahrbewegungen, denen ein solcher Balg nachgeben können muss, bedeutet dies, dass eine Längung des Balges bei Knick-, Nick- und Wankbewegungen im Wesentlichen allein durch ein Auseinanderziehen der einzelnen Wellen im Bereich der Schenkel bereitgestellt wird. Beim Stand der Technik ist es so, dass aufgrund der gewölbten Ausbildung des Stegs durch eine Längung des Stegs dieser ebenfalls, eben durch seine Längung, zu einer Formänderung des Balges in Längsrichtung beiträgt.

Alternativ kann vorgesehen sein daß, die einzelnen Gewebelagen auf ihren einander zugewandten Seiten mit einer Beschichtung, z. B. aus einem Elastomer oder einem Silikon, versehen sind.

Eine weitere Möglichkeit zur Erhöhung der Stetigkeit besteht darin, die Gewebelage des Balgmaterials des Stegs plastisch zu verformen. Bei einer plastischen Verformung des Gewebes, das aus einzelnen Kett- und Schussfäden besteht, werden die Zwischenräume zwischen den Kett- und Schussfäden ausgefüllt. Hierdurch versteift sich das Material als solches. Ein solches plastisch verformtes Gewebe wird dann zumindest auf einer Seite mit Kunststoff beschichtet, um den daraus hergestellten Balg dicht zu gestalten.

Nach einem weiteren Merkmal der Erfindung ist der Steg mit den Schenkeln überlappend vernäht und/oder verklebt. In diesem Zusammenhang besitzen die Schenkel vorteilhaft im Übergang zum Steg einen im Wesentlichen im rechten Winkel zum Schenkel verlaufenden Ansatz, der mit dem Steg verbunden ist, beispielsweise durch Verkleben oder Vernähen. Hierdurch wird erreicht, dass der Steg selbst nicht bis in den Bereich des Schenkels geführt werden muss, was zwangsweise zu einer gewölbten Form des Stegs führen würde.

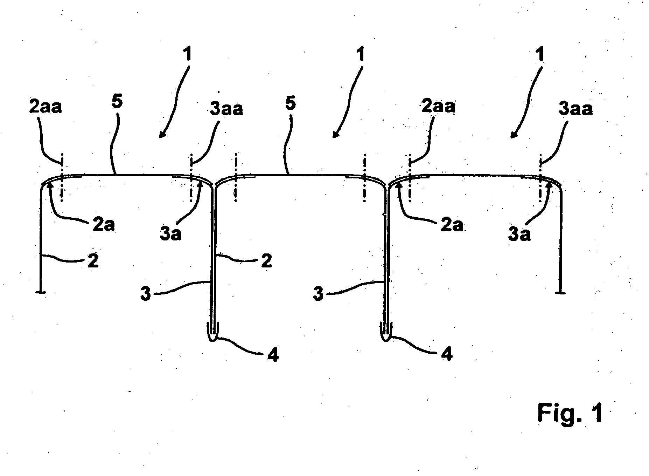

Anhand der Zeichnung wird die Erfindung beispielhaft näher erläutert.

Die einzige Figur zeigt hierbei schematisch einen Ausschnitt aus einem Wellenbalg, wobei die einzelnen Wellen 1 des Balges Schenkel 2 und 3 aufweisen, wobei die Schenkel 2 und 3 jeweils durch einen Balgrahmen 4 gehalten sind. Die Schenkel 2, 3 besitzen jeweils am oberen Ende einen Ansatz 2a, 3a, wobei auf dem Ansatz, und zwar auf dem im Wesentlichen rechtwinklig zum Schenkel 2, 3 verlaufenden Ansatz 2a, 3a der Steg 5 mit den Schenkeln bei 2aa, 3aa verbunden ist. Die Verbindung des Steges mit den Ansätzen kann hierbei sowohl von innen als auch von außer erfolgen.

Das Material des Stegs 5 kann hierbei nach einer ersten Variante, wie dies bereits beschrieben worden ist, stärker sein, als das Material der Schenkel, was ebenso zu einer Erhöhung der Festigkeit des Stegs führt, wie auch eine geeignete Materialauswahl im Hinblick auf ein Material für den Steg mit erhöhter Steifigkeit gegenüber dem Material der Welle für die Schenkel 2, 3. Alternativ kann, wie bereits ausgeführt, ein aus sich heraus steifes Material für den Steg gewählt werden, wobei die Steifigkeit des Materials des Stegs größer ist als die des Materials der Schenkel.

Denkbar ist allerdings auch, die Welle insgesamt in einer Form zu vulkanisieren und hierbei die Form der Welle in Rechteckform, also mit eben verlaufendem Steg, vorzugeben.

## Patentansprüche

1. Wellenbalg eines Übergangs zwischen zwei gelenkig miteinander verbundenen Fahrzeugen, umfassend mehrere im Querschnitt U-förmige Wellen (1), wobei zwei benachbarte Wellen (1) durch einen Rahmen (4) miteinander in Verbindung stehen, wobei die im Querschnitt U-förmige Welle (1) zwei Schenkel (2, 3) sowie einen die Schenkel (2, 3) verbindenden Steg (5) aufweist, wobei der Steg (5) im Wesentlichen eben ausgebildet ist, sodass die Schenkel (2, 3) und der Steg (5) in im Wesentlichen neutraler Stellung des.Balges im rechten Winkel zueinander verlaufen,
**dadurch gekennzeichnet,**
**dass** zur Erhöhung der Materialstärke der Steg (5) mehrere Gewebelagen aufweist:

2. Wellänbalg eines Übergangs nach Anspruch 1
**dadurch gekennzeichnet,**
**dass** die Materialstärke des Steges (5) größer ist als die Materialstärke der Schenkel (2, 3), wobei das Material von Steg (5) und Schenkel (2, 3) identisch ist.

3. Wellenbalg eines Übergangs nach Anspruch 1
**dadurch gekennzeichnet,**
**dass** das Material des Steges (5) steifer ist als das Material der Schenkel (2, 3).

4. Wellenbalg eines Übergangs nach einem der voranstehenden Ansprüche,
**dadurch gekennzeichnet,**
**dass** die mehreren Gewebelagen auf ihren einander zugewandten Flächen eine Beschichtung, z. B. aus einem Elastomer oder Silikon,
aufweisen.

5. Wellenbalg eines Übergangs nach einem der voranstehenden Ansprüche,
**dadurch gekennzeichnet,**
**dass** die Gewebelage des Balgmaterials des Steges (5) zur Erhöhung der Steifigkeit plastisch verformt ist.

6. Wellenbalg eines Übergangs nach einem der voranstehenden Ansprüche,
**dadurch gekennzeichnet,**
**dass** der Steg (5) mit den Schenkeln (2, 3) überlappend verklebt und/oder vernäht ist.

7. Wellenbalg eines Übergangs nach einem der voranstehenden Ansprüche,
**dadurch gekennzeichnet,**
**dass** der Schenkel (2, 3) im Übergang zum Steg (5) einen im Wesentlichen im rechten Winkel zum Schenkel, (2, 3) verlaufenden.
Ansatz (2a, 3a) aufweist, der mit dem Steg (5) verbunden ist.

## Claims

1. A corrugated bellows of a gangway between two articulately connected vehicles, comprising multiple corrugations (1) with a U-shaped cross-section, wherein two adjacent corrugations (1) are connected to each other by a frame (4), wherein the corrugation (1) with a U-shaped cross-section has two legs (2, 3) and a web (5) connecting the legs (2, 3), wherein the web (5) has a substantially plane configuration, so that the legs (2, 3) and the web (5) extend at a right angle relative to each other in a substantially neutral position of the bellows,
**characterized in that**
in order to increase the material thickness, the web (5) has multiple fabric layers.

2. The corrugated bellows of a gangway according to claim 1, **characterized in that**
the material thickness of the web (5) is greater than the material thickness of the legs (2, 3), wherein the material of the web (5) and the legs (2, 3) is identical.

3. The corrugated bellows of a gangway according to claim 1, **characterized in that**
the material of the web (5) is more rigid than the material of the legs (2,3).

4. The corrugated bellows of a gangway according to one of the aforementioned claims,
**characterized in that**
the multiple fabric layers have a coating, e.g. made of an elastomer or silicone, on their surfaces facing each other.

5. The corrugated bellows of a gangway according to one of the aforementioned claims,
**characterized in that**
the fabric layer of the bellows material of the web (5) is plastically deformed in order to increase its rigidity.

6. The corrugated bellows of a gangway according to one of the aforementioned claims,
**characterized in that**
the web (5) is glued and/or sewed to the legs (2, 3) in such a manner that they overlap.

7. The corrugated bellows of a gangway according to one of the aforementioned claims,
**characterized in that**
in the transition to the web (5) the leg (2, 3) has a projection (2a, 3a), which extends substantially at a right angle to the leg (2, 3) and is connected to the web (5).

## Revendications

1. Soufflet d'un passage entre deux véhicules articulés couplés entre eux comportant plusieurs bourrelets (1) ayant une section transversale en forme de U, dans lequel deux bourrelets voisins (1) sont liés au moyen d'un cadre (4), dans lequel le bourrelet (1) ayant une section transversale en forme de U comporte deux jambes (2, 3) ainsi qu'une traverse (5), dans lequel la traverse (5) présente une forme générale droite, de sorte que les jambes (2, 3) et la traverse (5), forment essentiellement un angle droit lorsque le soufflet se trouve dans une position neutre,
**caractérisé en ce que,**
la traverse (5) est constituée de plusieurs couches de tissu en vue d'accroître sa résistance matérielle.

2. Soufflet d'un passage selon la revendication 1,
**caractérisé en ce que,**
la résistance matérielle de la traverse (5) est supérieure à la résistance matérielle des jambes (2, 3), dans lequel le matériau du passage (5) est identique à celui des jambes (2, 3).

3. Soufflet d'un passage selon la revendication 1,
**caractérisé en ce que,**
le matériau du passage (5) est plus rigide que celui des jambes (2, 3).

4. Soufflet d'un passage selon l'une des revendications précédentes,
**caractérisé en ce que,**
les différentes couches de tissu comportent sur leurs côtés orientés les uns vers les autres un revêtement, par exemple en élastomère ou en silicone.

5. Soufflet d'un passage selon l'une des revendications précédentes,
**caractérisé en ce que,**
la couche de tissu du matériau de soufflet du passage (5) est mise en forme plastiquement pour augmenter sa rigidité.

6. Soufflet d'un passage selon l'une des revendications précédentes,
**caractérisé en ce que,**
le passage (5) est superposé et rabattu sur les jambes (2, 3) et collé ou cousu.

7. Soufflet d'un passage selon l'une des revendications précédentes,
**caractérisé en ce que,**
la jambe (2, 3) comporte un rebord (2a, 3a), au niveau de la liaison vers le passage (5), qui forme un angle sensiblement droit avec la jambe (2, 3) et qui est lié au passage (5).
